(19) Europäisches Patentamt
European Patent Office
Office européen des brevets

(11) **EP 3 792 651 B1**

(12) **EUROPEAN PATENT SPECIFICATION**

(45) Date of publication and mention
of the grant of the patent:
**13.12.2023 Bulletin 2023/50**

(21) Application number: **18922948.7**

(22) Date of filing: **13.06.2018**

(51) International Patent Classification (IPC):
**G01S 5/02** $^{(2010.01)}$

(52) Cooperative Patent Classification (CPC):
**G01S 5/02521; G01S 5/0244; G01S 5/0294**

(86) International application number:
**PCT/JP2018/022604**

(87) International publication number:
**WO 2019/239524 (19.12.2019 Gazette 2019/51)**

(54) **PATH ESTIMATING DEVICE AND PORTABLE INFORMATION TERMINAL**

WEGSCHÄTZUNGSVORRICHTUNG UND TRAGBARES INFORMATIONSENDGERÄT

DISPOSITIF D'ESTIMATION DE TRAJET ET TERMINAL D'INFORMATIONS PORTATIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.03.2021 Bulletin 2021/11**

(73) Proprietor: **Mitsubishi Electric Corporation
Tokyo 100-8310 (JP)**

(72) Inventors:
• **NAKAMURA, Masanari
Tokyo 100-8310 (JP)**
• **YAMADA, Tetsutaro
Tokyo 100-8310 (JP)**
• **KAMEDA, Hiroshi
Tokyo 100-8310 (JP)**

(74) Representative: **Mewburn Ellis LLP
Aurora Building
Counterslip
Bristol BS1 6BX (GB)**

(56) References cited:
JP-A- 2015 197 417      US-A1- 2012 007 779
US-A1- 2014 171 098     US-A1- 2014 171 098

• **KOCH ARTUR ET AL: "RFID-enabled location
fingerprinting based on similarity models from
probabilistic similarity measures", 2016 IEEE
INTERNATIONAL CONFERENCE ON ROBOTICS
AND AUTOMATION (ICRA), IEEE, 16 May 2016
(2016-05-16), pages 4557-4563, XP032908679,
DOI: 10.1109/ICRA.2016.7487656 [retrieved on
2016-06-08]**
• **XIE HONGWEI ET AL: "A Reliability-Augmented
Particle Filter for Magnetic Fingerprinting Based
Indoor Localization on Smartphone", IEEE
TRANSACTIONS ON MOBILE COMPUTING, IEEE
SERVICE CENTER, LOS ALAMITOS, CA, US, vol.
15, no. 8, 1 August 2016 (2016-08-01) , pages
1877-1892, XP011615761, ISSN: 1536-1233, DOI:
10.1109/TMC.2015.2480064 [retrieved on
2016-07-01]**

**Description**

TECHNICAL FIELD

The invention relates to a track estimating device that determines a track of an observation target, and a portable information terminal including the track estimating device.

BACKGROUND ART

In fingerprinting which is one of positioning systems, prior to determining the position of an observation target present in a predetermined area, a signal transmitted from a given signal source is received at a plurality of positions in the area, and the strengths of the received signals are recorded.
Then, in the fingerprinting, a strength map indicating a relationship between the plurality of positions in the area and the strengths of the reception signals is created.
In the fingerprinting, upon determining the position of the observation target, when a signal transmitted from the signal source is received, a signal strength close to the strength of the received signal is searched for from among the signal strengths included in the strength map.
Then, in the fingerprinting, a position associated with the searched signal strength is obtained from the strength map, and the obtained position is determined to be the position of the observation target.
However, due to the influence of multi-track, etc., a signal strength at a local position in the area may have a large outlier. The signal strength having a large outlier degrades the accuracy of determination of the position of the observation target.
The following Patent Literature 1 discloses a position estimating device that suppresses degradation in the accuracy of determination of a position even when a signal strength at a local position in an area has a large outlier.
The position estimating device disclosed in Patent Literature 1 computes weights of reception positions of electromagnetic wave signals which are estimated by a plurality of weak position estimators, using a particle filter for predicting a state of a portable terminal which is an observation target, and obtains a weighted average of the plurality of reception positions.
US 2012/007779 A1 discloses a location and tracking system for mobile devices.
US 2014/171098 A1 discloses a system for using a location fingerprint database to determine a location of a mobile device.
Xie Hongwei et al (2016), A Reliability-Augmented Particle Filter for Magnetic Fingerprinting Based Indoor Localization on Smartphone, IEEE Transactions on Mobile Computing, IEEE service centre, Los Alamitos, CA, US. Vol. 15, no. 8, pages 1877-1892, discloses a system using magnetic field data as fingerprints for indoor locating of smartphones.
Also Koch Artur et al (2016), RFID-enabled location fingerprinting based on similarity models from probabilistic similarity measures, 2016 IEEE International Conference on Robotics and Automation (ICRA), IEEE, 16 May 2016 (2016-05-16), pages 4557-4563, discloses relevant background.

CITATION LIST

PATENT LITERATURE

Patent Literature 1: JP 2015-197417 A

SUMMARY OF INVENTION

TECHNICAL PROBLEM

The position estimating device disclosed in Patent Literature 1 obtains a weighted average of a plurality of reception positions, and thus, the influence of a large outlier is reduced.
However, the fact remains that the position estimating device disclosed in Patent Literature 1 uses a large outlier upon determining the position of the portable terminal, and thus, there is a problem that the effect of the reduction in the influence of a large outlier is limited, which may result in degradation in the accuracy of determination of a position.
The invention is made to solve a problem such as that described above, and an object of the invention is to obtain a track estimating device and a portable information terminal that can estimate a track of an observation target without using a signal strength having a large outlier due to the influence of multi-track, etc.

SOLUTION TO PROBLEM

A track estimating device according to the invention is provided as set forth in claim 1.

ADVANTAGEOUS EFFECTS OF INVENTION

According to the invention, the track estimating device is configured in such a manner that the track estimating device includes the reliability calculating unit that calculates a reliability of an observation position estimated by the position estimating unit, using a probability density distribution for a signal strength at the observation position, and the track determining unit selects one data association hypothesis from among one or more data association hypotheses generated by the data association hypothesis generating unit, on the basis of the reliability of the observation position calculated by the reliability calculating unit, and determines a track included in a hypothesis included in the selected data association hypothesis to be the track of an observation target. Therefore, the track estimating device according to the invention can estimate the track of the observation target without using a signal strength having a large outlier due to the influence of multi-track, etc.

BRIEF DESCRIPTION OF DRAWINGS

FIG. 1 is a configuration diagram showing a track estimating device according to a first embodiment.
FIG. 2 is a hardware configuration diagram showing hardware of a position estimating unit 10 and a tracking processing unit 20 in the track estimating device according to the first embodiment.
FIG. 3 is a hardware configuration diagram of a computer at a time when the position estimating unit 10 and the tracking processing unit 20 are implemented by software, firmware, or the like.
FIG. 4 is a flowchart showing a processing procedure performed when the position estimating unit 10 and the tracking processing unit 20 are implemented by software, firmware, or the like.
FIG. 5 is an explanatory diagram showing positions $p_s(m)$ at which a signal outputted from a signal source s is received.
FIG. 6 is an explanatory diagram showing an overview of a process of calculating a reliability $cofs_k$ by a reliability calculating unit 22.
FIG. 7 is a configuration diagram showing a track estimating device according to a third embodiment.
FIG. 8 is a configuration diagram showing a track estimating device according to a fourth embodiment.
FIG. 9 is a hardware configuration diagram showing hardware of the position estimating unit 10 and the tracking processing unit 20 in the track estimating device according to the fourth embodiment.

DESCRIPTION OF EMBODIMENTS

To describe the invention in more detail, modes for carrying out the invention will be described below by referring to the accompanying drawings.

First Embodiment.

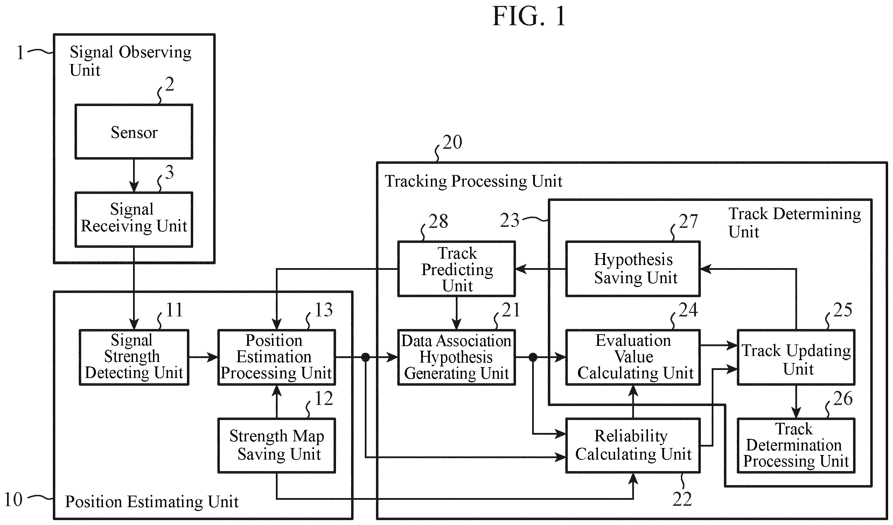

FIG. 1 is a configuration diagram showing a track estimating device according to a first embodiment.

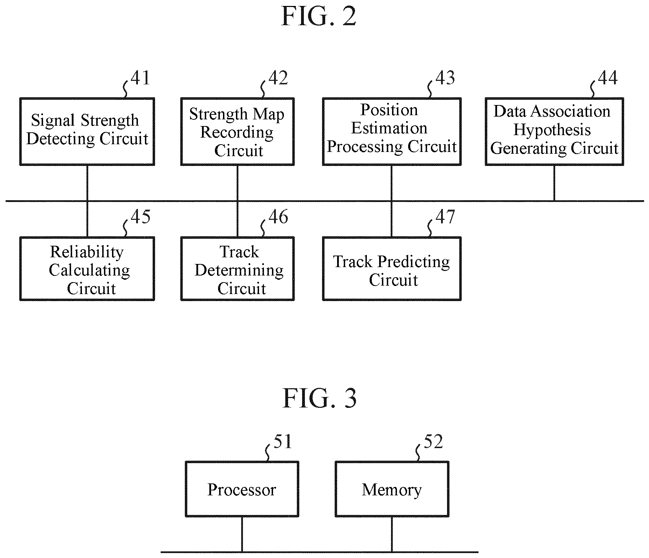

FIG. 2 is a hardware configuration diagram showing hardware of a position estimating unit 10 and a tracking processing unit 20 in the track estimating device according to the first embodiment.
In FIG. 1, a signal observing unit 1 is mounted on an observation target. The observation target may be a portable information terminal such as a smartphone or a tablet terminal.
The signal observing unit 1 includes a sensor 2 and a signal receiving unit 3.
The signal observing unit 1 receives a signal outputted from a signal source and outputs the received signal to the position estimating unit 10.
The signal source corresponds to a network device such as a wireless local area network (LAN) router installed in a predetermined area. The predetermined area may be indoor space such as a shopping mall or a public facility, etc., and it is assumed that one or more signal sources are installed in the predetermined area.
The sensor 2 receives a signal outputted from a signal source.
The signal receiving unit 3 detects the signal received by the sensor 2, using, for example, a matched filter and outputs the detected signal to a signal strength detecting unit 11.
The position estimating unit 10 includes the signal strength detecting unit 11, a strength map saving unit 12, and a position estimation processing unit 13.

The position estimating unit 10 estimates an observation position which is the position of the observation target from the strength of the signal received by the signal observing unit 1.

The signal strength detecting unit 11 is implemented by, for example, a signal strength detecting circuit 41 shown in FIG. 2.

The signal strength detecting unit 11 detects the strength of the signal outputted from the signal receiving unit 3 and outputs the detected signal strength to the position estimation processing unit 13.

The strength map saving unit 12 is implemented by, for example, a strength map recording circuit 42 shown in FIG. 2.

The strength map saving unit 12 saves a strength map indicating signal strengths obtained when a signal outputted from the signal source is received at each of a plurality of positions in the area.

Prior to estimating a track of the portable information terminal which is the observation target, receivers are temporarily installed at a respective plurality of positions in the area. The strength map is generated in such a manner that a signal outputted from the signal source is received by the plurality of receivers and the strength of each of the received signals is recorded for each installation position of a corresponding receiver.

The position estimation processing unit 13 is implemented by, for example, a position estimation processing circuit 43 shown in FIG. 2.

The position estimation processing unit 13 obtains the strength map saved in the strength map saving unit 12.

The position estimation processing unit 13 searches for a signal strength corresponding to the signal strength outputted from the signal strength detecting unit 11 from among the signal strengths at the plurality of reception positions which are indicated by the strength map.

The position estimation processing unit 13 searches for, for example, a signal strength closest to the signal strength outputted from the signal strength detecting unit 11 among the signal strengths at the respective reception positions which are indicated by the strength map, as a signal strength corresponding to the signal strength outputted from the signal strength detecting unit 11.

The position estimation processing unit 13 estimates a reception position associated with the searched signal strength in the strength map, as the observation position of the observation target, and outputs the observation position to a data association hypothesis generating unit 21.

When the position estimation processing unit 13 searches for a signal strength corresponding to the signal strength outputted from the signal strength detecting unit 11 from among the signal strengths at the plurality of reception positions which are indicated by the strength map, the position estimation processing unit 13 may use one or more hypotheses outputted from a track predicting unit 28.

Namely, the position estimation processing unit 13 calculates an average position of positions of the observation target which are indicated by a track included in one or more hypotheses outputted from the track predicting unit 28, and extracts signal strengths at positions whose distances from the average position are within a threshold value, from among the signal strengths at the plurality of reception positions indicated by the strength map.

The position estimation processing unit 13 searches for a signal strength corresponding to the signal strength outputted from the signal strength detecting unit 11 from among the extracted signal strengths.

The position estimation processing unit 13 estimates a reception position associated with the searched signal strength in the strength map, as the observation position of the observation target, and outputs the observation position to each of the data association hypothesis generating unit 21 and a reliability calculating unit 22.

The tracking processing unit 20 includes the data association hypothesis generating unit 21, the reliability calculating unit 22, a track determining unit 23, and the track predicting unit 28.

The data association hypothesis generating unit 21 is implemented by, for example, a data association hypothesis generating circuit 44 shown in FIG. 2.

The data association hypothesis generating unit 21 generates one or more data association hypotheses, each of the data association hypotheses including one hypothesis among one or more hypotheses outputted from the track predicting unit 28 and the observation position outputted from the position estimation processing unit 13.

The data association hypothesis generating unit 21 outputs the one or more data association hypotheses to each of the reliability calculating unit 22 and an evaluation value calculating unit 24.

The reliability calculating unit 22 is implemented by, for example, a reliability calculating circuit 45 shown in FIG. 2.

The reliability calculating unit 22 calculates a reliability of the observation position, using a probability density distribution for a signal strength at the observation position outputted from the position estimation processing unit 13, and outputs the reliability of the observation position to each of the evaluation value calculating unit 24 and a track updating unit 25.

The track determining unit 23 includes the evaluation value calculating unit 24, the track updating unit 25, a track determination processing unit 26, and a hypothesis saving unit 27.

The track determining unit 23 is implemented by, for example, a track determining circuit 46 shown in FIG. 2.

The track determining unit 23 selects one data association hypothesis from among the one or more data association hypotheses generated by the data association hypothesis generating unit 21, on the basis of the reliability of the observation position calculated by the reliability calculating unit 22, and determines a track included in a hypothesis included in the selected data association hypothesis to be the track of the observation target.

The evaluation value calculating unit 24 calculates the evaluation value of each data association hypothesis outputted from the data association hypothesis generating unit 21, on the basis of the reliability of the observation position outputted from the reliability calculating unit 22.

The track updating unit 25 updates each track included in a corresponding hypothesis included in a corresponding data association hypothesis, using a corresponding observation position included in the corresponding data association hypothesis. The corresponding data association hypothesis is one of the data association hypotheses where the evaluation value has been calculated by the evaluation value calculating unit 24.

The track updating unit 25 outputs each data association hypothesis including a hypothesis whose track has been updated, to each of the track determination processing unit 26 and the hypothesis saving unit 27.

The track determination processing unit 26 selects one data association hypothesis from among the one or more data association hypotheses on the basis of the evaluation value of each data association hypothesis outputted from the track updating unit 25, and determines a track included in a hypothesis included in the selected data association hypothesis to be the track of the observation target.

The hypothesis saving unit 27 saves a hypothesis included in each data association hypothesis outputted from the track updating unit 25.

The track predicting unit 28 is implemented by, for example, a track predicting circuit 47 shown in FIG. 2.

The track predicting unit 28 performs a prediction process for a track included in each hypothesis saved in the hypothesis saving unit 27, and outputs hypotheses including the respective tracks having been subjected to the prediction process to each of the position estimation processing unit 13 and the data association hypothesis generating unit 21.

In FIG. 1, it is assumed that each of the signal strength detecting unit 11, the strength map saving unit 12, the position estimation processing unit 13, the data association hypothesis generating unit 21, the reliability calculating unit 22, the track determining unit 23, and the track predicting unit 28 which are the components of the position estimating unit 10 and the tracking processing unit 20 is implemented by dedicated hardware such as that shown in FIG. 2. Namely, it is assumed that the position estimating unit 10 is implemented by the signal strength detecting circuit 41, the strength map recording circuit 42, and the position estimation processing circuit 43, and the tracking processing unit 20 is implemented by the data association hypothesis generating circuit 44, the reliability calculating circuit 45, the track determining circuit 46, and the track predicting circuit 47.

Here, the strength map recording circuit 42 corresponds, for example, to a nonvolatile or volatile semiconductor memory such as a random access memory (RAM), a read only memory (ROM), a flash memory, an erasable programmable read only memory (EPROM), or an electrically erasable programmable read only memory (EEPROM), a magnetic disk, a flexible disk, an optical disc, a compact disc, a Mini-Disc, or a digital versatile disc (DVD).

In addition, each of the signal strength detecting circuit 41, the position estimation processing circuit 43, the data association hypothesis generating circuit 44, the reliability calculating circuit 45, the track determining circuit 46, and the track predicting circuit 47 corresponds, for example, to a single circuit, a combined circuit, a programmed processor, a parallel programmed processor, an application specific integrated circuit (ASIC), a field-programmable gate array (FPGA), or a combination thereof.

The components of the position estimating unit 10 and the tracking processing unit 20 are not limited to being implemented by dedicated hardware, and the position estimating unit 10 and the tracking processing unit 20 may be implemented by software, firmware, or a combination of software and firmware.

The software or firmware is stored as a program in a memory of a computer. The computer indicates hardware that executes programs and corresponds, for example, to a central processing unit (CPU), a central processor, a processing unit, an arithmetic unit, a microprocessor, a microcomputer, a processor, or a digital signal processor (DSP) .

FIG. 3 is a hardware configuration diagram of a computer at a time when the position estimating unit 10 and the tracking processing unit 20 are implemented by software, firmware, or the like.

When the position estimating unit 10 and the tracking processing unit 20 are implemented by software, firmware, or the like, the strength map saving unit 12 is formed in a memory 52 of the computer. A program for causing the computer to perform a processing procedure of the signal strength detecting unit 11, the position estimation processing unit 13, the data association hypothesis generating unit 21, the reliability calculating unit 22, the track determining unit 23, and the track predicting unit 28 is stored in the memory 52. Then, a processor 51 of the computer executes the program stored in the memory 52.

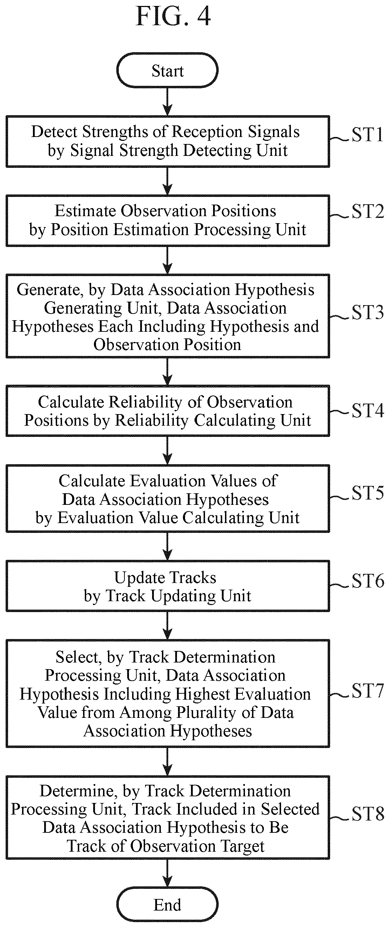

FIG. 4 is a flowchart showing a processing procedure performed when the position estimating unit 10 and the tracking processing unit 20 are implemented by software, firmware, or the like.

In addition, FIG. 2 shows an example in which each component of the position estimating unit 10 and the tracking processing unit 20 is implemented by dedicated hardware, and FIG. 3 shows an example in which the position estimating unit 10 and the tracking processing unit 20 are implemented by software, firmware, or the like. However, the configuration is not limited thereto, and some components of the position estimating unit 10 and the tracking processing unit 20 may be implemented by dedicated hardware and the other components may be implemented by software, firmware, or the like.

Next, operation of the track estimating device shown in FIG. 1 will be described.

In the track estimating device shown in FIG. 1, it is assumed that there are U signal sources s (s = 1, 2, ..., U) and the sensor 2 receives U signals from the U signal sources s.

Before the track estimating device estimates the track of an observation target, a strength map $h_s$ for each signal source s is saved in the strength map saving unit 12.

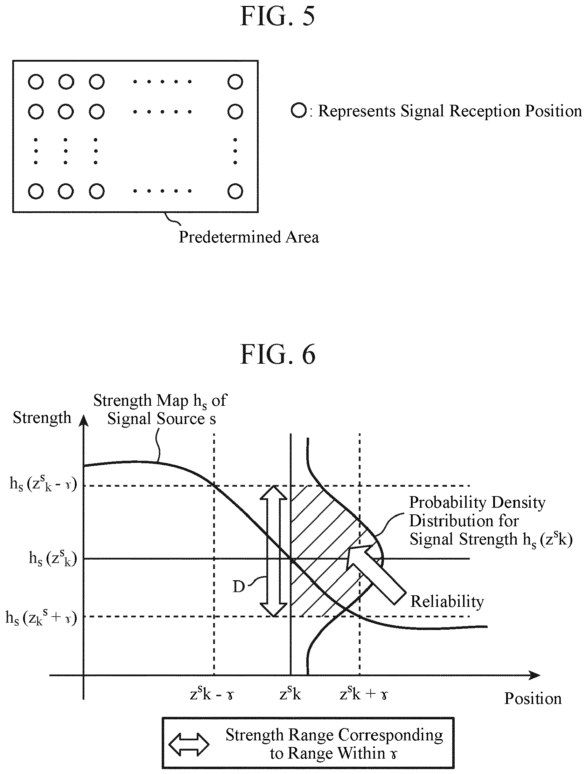

The strength map $h_s$ indicates, as shown in FIG. 5, signal strengths $h_s(m)$ obtained when a signal outputted from the signal source s is received at each position $p_m$ (m = 1, 2, ..., M) in an area.

FIG. 5 is an explanatory diagram showing positions $p_s(m)$ at which a signal outputted from a signal source s is received.

In FIG. 5, o represent a position $p_s(m)$ at which a signal outputted from the signal source s is received. In FIG. 5, o are two-dimensionally arranged.

When a user carrying a portable information terminal which is the observation target enters a predetermined area, the sensor 2 receives each of signals outputted from the U signal sources s and outputs the U reception signals to the signal receiving unit 3.

It is assumed that a signal outputted from a signal source s is added with an identification code for identifying the signal source s.

When the signal receiving unit 3 receives the U reception signals obtained at a time k from the sensor 2, the signal receiving unit 3 detects each of the U reception signals using, for example, a matched filter and outputs the detected U reception signals to the signal strength detecting unit 11.

The time is a sampling time in each of the position estimating unit 10 and the tracking processing unit 20. For example, the time k is the current sampling time and a time k-1 is the last sampling time.

When the signal strength detecting unit 11 receives the U reception signals obtained at the time k from the signal receiving unit 3, the signal strength detecting unit 11 detects each of the strengths $str^s_k$ of the U reception signals obtained at the time k, and outputs the U detected signal strengths $str^s_k$ to the position estimation processing unit 13 (step ST1 of FIG. 4).

The position estimation processing unit 13 calculates an average position $p^i_{ave}$ of positions $p^i$ of the observation target which are indicated by a track $x^i_{k|k-1}$ included in one or more hypotheses $H^i_{k-1}$ (i is 1, 2, ..., I) outputted from the track predicting unit 28.

An ith hypothesis $H^i_{k-1}$ includes an evaluation value $c^i_{k-1}$ of a data association hypothesis at a time k-1 and a track $x^i_{k|k-1}$ of the observation target at the time k-1.

The ith hypothesis $H^i_{k-1}$ is represented as shown in the following equation (1):

$$H^i_{k-1} = \left\{ c^i_{k-1}, x^i_{k|k-1} \right\} \qquad (1)$$

The position estimation processing unit 13 obtains each signal strength $str^s_k$ at the time k from the signal strength detecting unit 11.

The position estimation processing unit 13 extracts, for each strength map $h_s$, signal strengths at positions whose distances from the average position $p^i_{ave}$ are within a threshold value $L_{th}$, from among signal strengths $h_s(1)$ to $h_s(M)$ at positions $p_s(1)$ to $p_s(M)$ which are indicated by the strength map $h_s$. The average position $p^i_{ave}$ is an average value (expected value) of $p^i$ which is a random variable.

The threshold value $L_{th}$ may be stored in an internal memory of the position estimation processing unit 13 or may be provided from an external source.

Here, for convenience of description, it is assumed that the position estimation processing unit 13 extracts N signal strengths. The N signal strengths are represented as $h_s(1)$ to $h_s(N)$.

The position estimation processing unit 13 searches for a signal strength $h_s(n)$ closest to the signal strength $str^s_k$ obtained at the time k from among the extracted N signal strengths $h_s(1)$ to $h_s(N)$.

Since there are strength maps $h_s$ provided for the U signal sources s, U signal strengths $h_s(n)$ are searched for by the position estimation processing unit 13.

The position estimation processing unit 13 obtains, from each of the U strength maps $h_s$, a position $p_s(n)$ associated with the searched signal strength $h_s(n)$ and estimates each position $p_s(n)$ as an observation position $z^s_k$ of the observation target (step ST2 of FIG. 4).

The position estimation processing unit 13 outputs the observation positions $z^s_k$ of the observation target to each of the data association hypothesis generating unit 21 and the reliability calculating unit 22.

Since there are strength maps $h_s$ provided for the U signal sources s, the position estimation processing unit 13 outputs U observation positions $z^s_k$ to the data association hypothesis generating unit 21 and the reliability calculating unit 22.

The data association hypothesis generating unit 21 generates data association hypotheses $CH^{j, s}_k$ each including an evaluation value $c^i_{k-1}$ and a track $x^i_{k|k-1}$ which are included in one hypothesis $H^i_{k-1}$ among one or more hypotheses $H^i_{k-1}$ outputted from the track predicting unit 28; and one observation position $z^s_k$ among the U observation positions $z^s_k$ (step ST3 of FIG. 4).

A jth data association hypothesis $CH^{j, s}_k$ is represented as shown in the following equation (2):

$$CH^{j,s}_k = \left\{ c^i_{k-1}, x^i_{k|k-1}, z^s_k \right\} \qquad (2)$$

In equation (2), j = 1, 2, ..., I×U.

In addition, the data association hypothesis generating unit 21 assumes that all of the U observation positions $z^s_k$ outputted from the position estimation processing unit 13 are not correct, and thus also generates data association hypotheses $CH^{j, s}_k$ that do not include the observation positions $z^s_k$ (step ST3 of FIG. 4).

$$CH^{0,i}_k = \left\{ c^i_{k-1}, x^i_{k|k-1} \right\} \qquad (3)$$

The data association hypothesis generating unit 21 outputs each of the data association hypotheses $CH^{j, s}_k$ and the data association hypotheses $CH^{0, i}_k$ to each of the reliability calculating unit 22 and the evaluation value calculating unit 24.

When the reliability calculating unit 22 receives the U observation positions $z^s_k$ from the position estimation processing unit 13, the reliability calculating unit 22 calculates a reliability $cof^s_k$ of each observation position $z^s_k$, using a probability density distribution $f_s$ for a signal strength (step ST4 of FIG. 4).

A process of calculating a reliability $cof^s_k$ by the reliability calculating unit 22 will be specifically described below.

FIG. 6 is an explanatory diagram showing an overview of the process of calculating a reliability $cof^s_k$ by the reliability calculating unit 22.

The reliability $cof^s_k$ of an observation position $z^s_k$ is the probability of the observation position $z^s_k$ being present within $\gamma$ from a true position $z_T$.

The observation value of strength of a signal source s at a given position a follows the following probability density distribution:

$$f_s(v; h_s(a), \sigma_s) = \frac{1}{\sqrt{2\pi\sigma_s^2}} \exp\left( -\frac{(v - h_s(a))^2}{2\sigma_s^2} \right) \qquad (4)$$

In equation (4), v is a variable representing the observation value of strength and $f_s(v)$ is a normal distribution with the mean "$h_s(a)$" and the variance "$\sigma_s^2$".

When the range within $\gamma$ from the true position $z_T$ {y; |y - $z_T$| ≤ $\gamma$} is set as Y, the strength range D of Y is represented as shown in the following equation (4'):

$$D = [\min(h_s(y_1), \max(h_s(y_2))], y_1, y_2 \in Y \qquad (4')$$

By integrating the probability density distribution for the observation value of strength in the strength range D, a reliability $cof^s_k$ is computed as shown in the following equation (5):

$$cof^s_k = \int_D f_s(v; h_s(Z_T), \sigma_s)\delta z \qquad (5)$$

Although in the above description the true position $z_T$ is used in the computation of the reliability $cof^s_k$, since the true position is unknown, for example, an average position $p^j_{ave}$ of a track $x^j_{k|k-1}$ included in a data association hypothesis $CH^{j, s}_k$ is used instead.

The reliability calculating unit 22 outputs the reliability s $cof^s_k$ of the observation positions $z^s_k$ to each of the evaluation value calculating unit 24 and the track updating unit 25.

When the evaluation value calculating unit 24 receives the reliability s $cof^s_k$ of the observation positions $z^s_k$ from the reliability calculating unit 22, the evaluation value calculating unit 24 calculates an evaluation value $c^{j,\,s}_k$ of each data association hypothesis $CH^{j,\,s}_k$ and an evaluation value $c^{0,\,i}_k$ of each data association hypothesis $CH^{0,\,i}_k$ outputted from the data association hypothesis generating unit 21, on the basis of the reliability s $cof^s_k$ of the observation positions $z^s_k$ (step ST5 of FIG. 4).

Namely, the evaluation value calculating unit 24 calculates the evaluation value $c^{j,\,s}_k$ of the data association hypothesis $CH^{j,\,s}_k$ as shown in the following equation (6):

$$c_k^{j,s} = c_{k-1}^{j,s} \times g \times cof_k^s \qquad (6)$$

In equation (6), g is the likelihood of a track $x^i_{k|k-1}$ included in the data association hypothesis $CH^{j,\,s}_k$. $c^{j,\,s}_{k-1}$ is the evaluation value of a data association hypothesis $CH^{j,\,s}_{k-1}$ and corresponds to the evaluation value $c^i_{k-1}$ shown in equation (1).

The evaluation value calculating unit 24 calculates the evaluation value $c^{0,\,i}_k$ of the data association hypothesis $CH^{0,\,i}_k$ as shown in the following equation (7):

$$c_k^{0,i} = c_{k-1}^{0,i} \times \beta_{FT} \times (1 - cof_k^i) \qquad (7)$$

In equation (7), $\beta_{FT}$ is the rate of occurrence of an unwanted signal.

The rate of occurrence $\beta_{FT}$ of an unwanted signal may be stored in an internal memory of the evaluation value calculating unit 24 or may be provided from an external source.

The evaluation value calculating unit 24 outputs the data association hypotheses $CH^{j,\,s}_k$ obtained at the time k, each including the evaluation value $c^{j,\,s}_k$ to the track updating unit 25.

$$CH_k^{j,s} = \left\{ c_k^{j,s}, x_{k|k-1}^i, z_k^s \right\} \qquad (8)$$

In addition, the evaluation value calculating unit 24 outputs the data association hypotheses $CH^{0,\,i}_k$ obtained at the time k, each including the evaluation value $c^{0,\,i}_k$ to the track updating unit 25.

$$CH_k^{0,i} = \left\{ c_k^{0,i}, x_{k|k-1}^i \right\} \qquad (9)$$

When the track updating unit 25 receives the data association hypotheses $CH^{j,\,s}_k$ and the data association hypotheses $CH^{0,\,i}_k$ obtained at the time k from the evaluation value calculating unit 24, the track updating unit 25 updates a track $x^i_{k|k-1}$ included in each data association hypothesis $CH^{j,\,s}_k$, using an observation position $z^s_k$ included in the data association hypothesis $CH^{j,\,s}_k$ (step ST6 of FIG. 4) .

The update to the track $x^i_{k|k-1}$ can be performed using a Kalman filter as shown in the following equation (10). The data association hypotheses $CH^{0,\,i}_k$ do not include the observation positions $z^s_k$ and thus an update is not performed for the data association hypotheses $CH^{0,\,i}_k$.

$$x_{k|k}^i = x_{k|k-1}^i + K_k^i \left( z_k^s - f\left(x_{k|k-1}^i\right) \right) \qquad (1\ 0)$$

In equation (10), $x^i_{k|k}$ is an updated track at the time k and $x^i_{k|k-1}$ is a track before an update.

$K^i_k$ is a Kalman gain matrix of track s included in ith data association hypotheses $CH^{j,\,s}_k$ and $CH^{0,\,i}_k$ obtained at the time k. f() is a function that converts the track $x^i_{k|k-1}$ to an observation position.

The track updating unit 25 outputs the data association hypotheses $CH^{j,\,s}_k$ including the updated tracks $x^i_{k|k}$ and the data association hypotheses $CH^{0,\,i}_k$ to each of the track determination processing unit 26 and the hypothesis saving unit 27.

The data association hypotheses $CH^{j,\,s}_k$ including the updated tracks $x^i_{k|k}$ and the data association hypotheses $CH^{0,\,i}_k$ are represented as shown in the following equations (11) and (12):

$$CH_k^{j,s} = \left\{ c_k^{j,s}, x_{k|k}^i, z_k^s \right\} \qquad (1\ 1)$$

$$CH_k^{0,i} = \{c_k^{0,i}, x_{k|k}^i\} \qquad\qquad (12)$$

When the track determination processing unit 26 receives the data association hypotheses $CH^{j,\,s}_k$ and the data association hypotheses $CH^{0,\,i}_k$ from the track updating unit 25, the track determination processing unit 26 selects a data association hypothesis $CH_{MAX}$ including the highest evaluation value from among the data association hypotheses $CH^{j,\,s}_k$ and the data association hypotheses $CH^{0,\,i}_k$ (step ST7 of FIG. 4).

The track determination processing unit 26 determines a track $x_{k|k}$ included in the selected data association hypothesis $CH_{MAX}$ to be the track of the portable information terminal which is the observation target (step ST8 of FIG. 4).

The hypothesis saving unit 27 saves hypotheses $\{c^{j,\,s}_k, x_{k|k}\}$ included in the data association hypotheses $CH^{j,\,s}_k$ and hypotheses $\{c^{0,\,i}_k, x_{k|k}\}$ included in the data association hypotheses $CH^{0,\,i}_k$ outputted from the track updating unit 25.

For simplification of description, the following description is made assuming that the hypotheses $\{c^{j,\,s}_k, x_{k|k}\}$ and the hypotheses $\{c^{0,\,i}_k, x_{k|k}\}$ are $H^i_k$.

The track predicting unit 28 performs a prediction process for tracks $_x{}^i_{k|k}$ included in the $H^i_k$ saved in the hypothesis saving unit 27 so that a track determination process can be performed at a sampling time k+1.

The track predicting unit 28 outputs hypotheses $H^i_{k+1}$ including tracks $x^i_{k+1|k}$ having been subjected to the prediction process to each of the position estimation processing unit 13 and the data association hypothesis generating unit 21.

A track prediction process performed by the track predicting unit 28 will be specifically described below.

It is assumed that the track predicting unit 28 performs a track prediction process using an equation of motion of the observation target.

As the equation of motion, an equation of motion of uniform linear motion can be used as shown in the following equation (13):

$$x^i_{k+1|k} = F x^i_{k|k} + \Gamma w$$

$$F = \begin{bmatrix} I_2 & (t_{k+1} - t_k)/I_2 \\ 0 \cdot I_2 & I_2 \end{bmatrix} \qquad\qquad (13)$$

$$\Gamma = \begin{bmatrix} (t_{k+1} - t_k)/I_2 \\ I_2 \end{bmatrix}$$

In equation (13), $x^i_{k+1|k}$ represents a prediction result for a track $x^i_{k|k}$ included in an ith hypothesis $H^i_k$.
w is a two-dimensional process noise vector with zero mean indicating ambiguity in motion speed.

$I_2$ is a 2×2 unit matrix.

At this time, when the position of the observation target is represented by the following equation (14) and the speed of the observation target is represented by the following equation (15), a track $x^i_{k+1|k}$ is represented as shown in the following equation (16):

$$px^i_{k+1|k}, py^i_{k+1|k} \qquad\qquad (14)$$

$$\dot{v}x^i_{k+1|k}, \dot{v}y^i_{k+1|k} \qquad\qquad (15)$$

$$x^i_{k+1|k} = \left(px^i_{k+1|k}, py^i_{k+1|k}, \dot{v}x^i_{k+1|k}, \dot{v}y^i_{k+1|k}\right)^T \qquad (16)$$

In equation (16), T is a symbol representing transpose.

In the above-described first embodiment, the track estimating device is configured in such a manner that the track estimating device includes the reliability calculating unit 22 that calculates a reliability of an observation position estimated by the position estimating unit 10, using a probability density distribution for a signal strength at the observation position, and the track determining unit 23 selects one data association hypothesis from among one or more data association hypotheses generated by the data association hypothesis generating unit 21, on the basis of the reliability of the observation position calculated by the reliability calculating unit 22, and determines a track included in a hypothesis included in the selected data association hypothesis to be the track of an observation target. Therefore, the track estimating device can estimate the track of the observation target without using a signal strength having a large outlier due to the influence of multi-track, etc.

In the track estimating device shown in FIG. 1, the position estimation processing unit 13 extracts signal strengths at positions whose distances from an average position $p^i_{ave}$ are within the threshold value $L_{th}$, from among positions $p_s(1)$ to $p_s(M)$ indicated by a strength map $h_s$. The position estimation processing unit 13 performs the process of extracting signal strengths to ease a process of searching for the closest signal strength $h_s(n)$.

The strength map for each signal source represents strengths of signals received at a plurality of positions beforehand, and a higher density strength map may be created and used by complementing strengths between a plurality of positions using linear interpolation, etc. An interpolation function may be a function that performs linear interpolation, spline interpolation, Gaussian process regression, or the like.

The position estimation processing unit 13 extracts, for each strength map $h_s$, signal strengths at positions whose distances from an average position $p^i_{ave}$ are within the threshold value $L_{th}$, from among positions $p_s(1)$ to $p_s(M)$ indicated by the strength map $h_s$. Furthermore, the position estimation processing unit 13 may perform, on the extracted signal strengths, a process of re-extracting only signal strengths within a threshold value $L_{th2}$ from the value $h_s(p^i_{ave})$ of strength at the average position $p^i_{ave}$ on the strength map. In addition, although in the above description the strength map is discrete data which is "strengths at a plurality of positions", the strength map may be represented as a continuous strength function. Specifically, by estimating a parameter such as a spline curve, a Gaussian process, or the like, using discrete data of a strength map, the strength map can be represented as a continuous smooth function.

A method of estimating a position of the observation target when a strength map is represented as a continuous function will be described below.

When a strength map of a signal source s is $h_s$ and the strength of the signal source s observed at a time k is $str^s_k$, an estimated position is, for example, a position p at which $(h_s(p) - str^s_k)^2$ has the minimum value.

The minimum value of $(h_s(p) - str^s_k)^2$ can be determined using, for example, a nonlinear least squares method.

When the nonlinear least squares method is used, an initial value of a search process needs to be determined and, for example, an average position $p^i_{ave}$ is used as the initial value.

In addition, a nonlinear least squares method may be performed using, as initial values, a plurality of sampling points at which sampling is performed in a distribution followed by a position $p^i$ of the observation target indicated by a track $x^i_{k|k-1}$ included in a hypothesis $H^i_{k-1}$, and a position whose value after performing the nonlinear least squares method is smallest may be determined to be an estimated position. By performing a nonlinear least squares method using a plurality of sampling points as initial values, the possibility that an estimated position is a local solution can be reduced and thus the accuracy of estimation can be improved.

In addition, and according to an example not falling under the scope of the claimed invention, the position estimation processing unit 13 may divide a plurality of signals for the respective signal sources s which are received by the signal observing unit 1 into groups and may estimate the observation positions for each one of the groups, each one of the observation positions being estimated from the strengths $str^s_k$ of signals belonging to the corresponding group.

The estimation of an observation position for each group will be specifically described below.

The indices of signal sources selected in a given group o are set as $q_1$, $q_2$, ..., $q_Q$. At this time, the selected signal sources are represented as $s_{q1}$, $s_{q2}$, ..., $s_{qQ}$.

An observation position $z^o_k$ is determined as a position at which an argument to argmin in the following equation (17) is minimized:

$$z_k^o = arg \min_p \sum_{t=1}^{t=Q} (h_{s_{qt}}(p) - str_k^{s_{qt}})^2 \qquad (1\,7)$$

Here, when a strength map is discrete data, the observation position $z^o_k$ is a position at which the argument to argmin in equation (17) is minimized among positions included in the strength map. When a strength map is a continuous function, the observation position $z^o_k$ is a position with the minimum value of the argument to argmin which is determined by a nonlinear-least-squares method, etc.

Second Embodiment.

In a second embodiment, a process of estimating observation noise in the reliability calculating unit 22 will be specifically described.

A configuration diagram of a track estimating device according to the second embodiment is shown in FIG. 1 as with the track estimating device according to the first embodiment.

To update a track using a Kalman filter, a variance-covariance matrix for an observation position is required.

Hence, a process of determining a variance-covariance matrix for an observation position from the variance of an observed strength for each signal source and strength maps will be specifically described. Here, it is assumed that observation noise follows a normal distribution.

The reliability calculating unit 22 determines a variance-covariance matrix for an observation position in a given data association hypothesis $CH^{j, s}_k$ outputted from the data association hypothesis generating unit 21. How to determine the variance-covariance matrix is described as follows. It is assumed that the observation position included in $CH^{j, s}_k$ is estimated from signal sources $s_{q1}, s_{q2}, ..., s_{qQ}$ specified by indices $q_1, q_2, ..., q_Q$. At this time, a Jacobian matrix J at a true position $z_T$ can be computed as shown in the following equation (18):

$$J = \begin{bmatrix} \dfrac{\partial h_{s_{q1}}}{\partial x}(z_T) & \dfrac{\partial h_{s_{q1}}}{\partial y}(z_T) \\ \dfrac{\partial h_{s_{q2}}}{\partial x}(z_T) & \dfrac{\partial h_{s_{q2}}}{\partial y}(z_T) \\ \vdots & \vdots \\ \dfrac{\partial h_{s_{qQ}}}{\partial x}(z_T) & \dfrac{\partial h_{s_{qQ}}}{\partial y}(z_T) \end{bmatrix}^{-1} \qquad (18)$$

By using the Jacobian matrix J when the variance of an observed strength for each signal source is $\sigma_{sq1}^2$, $\sigma_{sq2}^2$, ..., $\sigma_{sqQ}^2$, the reliability calculating unit 22 determines a variance-covariance matrix B for observation noise as shown in the following equation (19):

$$B = JAJ^T$$
$$A = \begin{bmatrix} \sigma_{s_{q1}}^2 & 0 & \cdots & 0 \\ 0 & \sigma_{s_{q2}}^2 & \cdots & 0 \\ \vdots & \vdots & \ddots & \vdots \\ 0 & 0 & \cdots & \sigma_{s_{qQ}}^2 \end{bmatrix} \qquad (19)$$

Here, the variance of an observed strength for each signal source is, for example, measured in advance upon creating a strength map. In addition, at this time, variance may be measured for each of a plurality of positions, and a value based on a position $z_T$ may be set in $\sigma_{sq1}^2, \sigma_{sq2}^2, ..., \sigma_{sqQ}^2$ when the above-described computation is performed.

Although in the above-described computation the true position $z_T$ is used, since the true position is unknown, for example, an average position $p^j_{ave}$ of a track $x^j_{k|k-1}$ included in a data association hypothesis $CH^{j, s}_k$ is used instead.

In the above-described second embodiment, the track estimating device is configured in such a manner that the reliability calculating unit 22 calculates a reliability of an observation position estimated by the position estimating unit 10 and also estimates observation noise which is noise at the observation position, using a probability density distribution, and the track determining unit 23 updates each track included in a corresponding hypothesis included in a corresponding data association hypothesis, using corresponding position of the observation target and the observation noise. The corresponding position of the observation target is included in the corresponding data association hypothesis, where the corresponding data association hypothesis is one of the data association hypotheses generated by the data association hypothesis generating unit 21. Therefore, the track estimating device can increase the accuracy of estimation of a track over the first embodiment.

Third Embodiment.

A third embodiment describes a track estimating device in which a track predicting unit 62 performs a prediction process for a track included in each hypothesis saved in the hypothesis saving unit 27, using measurement data of an observation target observed by a measurement data observing unit 61.

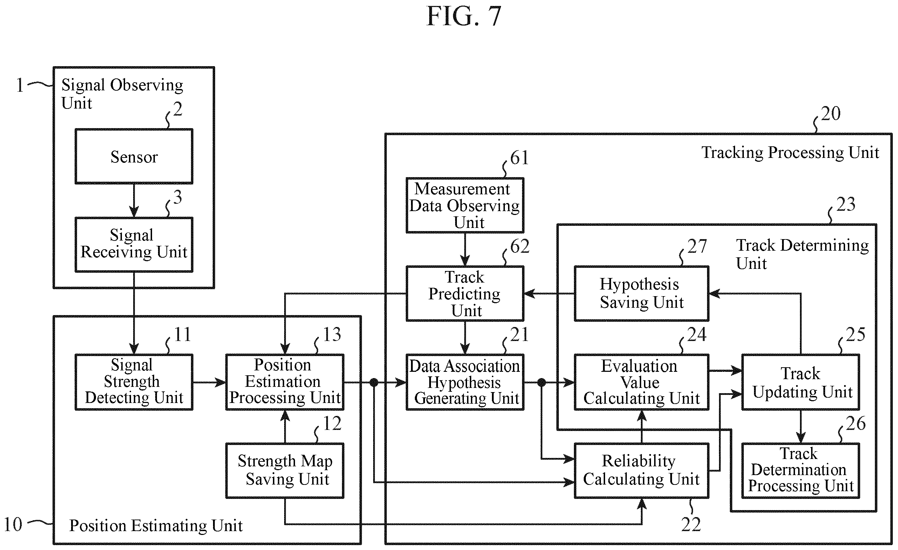

FIG. 7 is a configuration diagram showing a track estimating device according to the third embodiment.

In FIG. 7, the same reference signs as those of FIG. 1 indicate the same or corresponding portions and thus description thereof is omitted.

The measurement data observing unit 61 includes an acceleration sensor and an angular velocity sensor.

The measurement data observing unit 61 observes acceleration of an observation target using the acceleration sensor and observes angular velocity of the observation target using the angular velocity sensor, as measurement data of the observation target.

The measurement data observing unit 61 outputs each of the acceleration and angular velocity of the observation target to the track predicting unit 62.

The track predicting unit 62 is implemented by, for example, the track predicting circuit 47 shown in FIG. 2.

The track predicting unit 62 performs a prediction process for a track included in each hypothesis saved in the hypothesis saving unit 27, using each of the acceleration and angular velocity outputted from the measurement data observing unit 61.

The track predicting unit 62 outputs hypotheses including the respective tracks having been subjected to the prediction process to each of the position estimation processing unit 13 and the data association hypothesis generating unit 21.

Next, operation of the track estimating device shown in FIG. 7 will be described.

Note, however, that since the components of the track estimating device are the same as those of the track estimating device shown in FIG. 1 except for the measurement data observing unit 61 and the track predicting unit 62, here, only operation of the measurement data observing unit 61 and the track predicting unit 62 will be described.

The measurement data observing unit 61 observes acceleration of an observation target using the acceleration sensor and observes angular velocity of the observation target using the angular velocity sensor.

The measurement data observing unit 61 outputs each of the acceleration and angular velocity of the observation target to the track predicting unit 62.

The track predicting unit 62 calculates a moving distance $\Delta r$ of the observation target between a time k-1 and a time k by integrating the acceleration twice which is outputted from the measurement data observing unit 61.

In addition, the track predicting unit 62 calculates an amount of change $\Delta\theta$ in the moving direction of the observation target by integrating the angular velocity once which is outputted from the measurement data observing unit 61.

The track predicting unit 62 performs a prediction process for a track included in an ith hypothesis at a time k+1, using the moving distance $\Delta r$ and the amount of change $\Delta\theta$ in moving direction as shown in the following equation (20) :

$$x_{k+1|k}^i = \begin{bmatrix} h(x_{k|k}^i) \\ 0 \\ 0 \end{bmatrix} + \begin{bmatrix} \Delta r cos(\theta_{k|k}^i + \Delta\theta) \\ \Delta r sin(\theta_{k|k}^i + \Delta\theta) \\ \dfrac{\Delta r cos(\theta_{k|k}^i + \Delta\theta)}{t_k - t_{k-1}} \\ \dfrac{\Delta r sin(\theta_{k|k}^i + \Delta\theta)}{t_k - t_{k-1}} \end{bmatrix} + \Gamma w \qquad (20)$$

In equation (20), h($x_{k|k}^i$) is a function that extracts only a position of the observation target from a track $x_{k|k}^i$ as shown in the following equation (21):

$$h(x_{k|k}^i) = \left( x_{k|k}^i, y_{k|k}^i \right)^T \qquad (21)$$

In addition, $\theta_{k|k}^i$ can be represented using velocity included in the track $x_{k|k}^i$ as shown in the following equation (22):

$$\theta_{k|k}^i = \tan^{-1}\left( \frac{\dot{y}_{k|k}^i}{\dot{x}_{k|k}^i} \right) \qquad (22)$$

The track predicting unit 62 outputs hypotheses including the respective tracks having been subjected to the prediction process to each of the position estimation processing unit 13 and the data association hypothesis generating unit 21.

Note that when measurement data can be observed, the track predicting unit 62 performs the prediction process of equation (13) in parallel to the prediction process of equation (20). Then, the track predicting unit 62 may also output hypotheses including respective tracks having been subjected to the prediction process in equation (13) to each of the position estimating unit 10 and the data association hypothesis generating unit 21.

By performing the above-described process, when an error of the prediction process of equation (20) is large due to a large error in the observation values of measurement data, results of the prediction process of equation (13) can be used, and thus, it is less likely to be influenced by the error in the observation values of measurement data.

In the above-described third embodiment, the track estimating device is configured in such a manner that the track predicting unit 62 performs a prediction process for a track included in each hypothesis saved in the hypothesis saving unit 27, using measurement data of an observation target observed by the measurement data observing unit 61. Therefore, even when motion of the observation target is changed, the track estimating device can suppress a reduction in the accuracy of a track prediction process.

Fourth Embodiment

A fourth embodiment describes a track estimating device in which the track determining unit 23 limits tracks to be subjected to a prediction process by the track predicting unit 62, using map information.

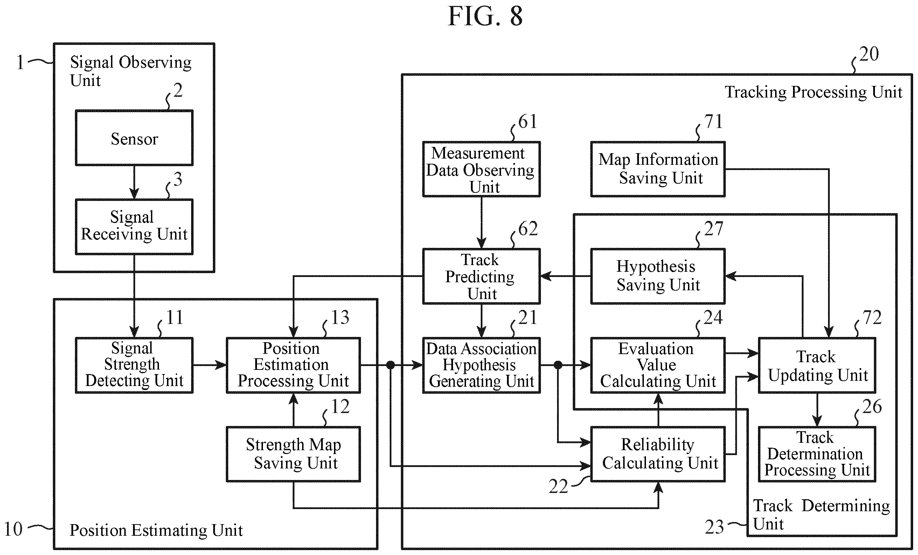

FIG. 8 is a configuration diagram showing a track estimating device according to the fourth embodiment.

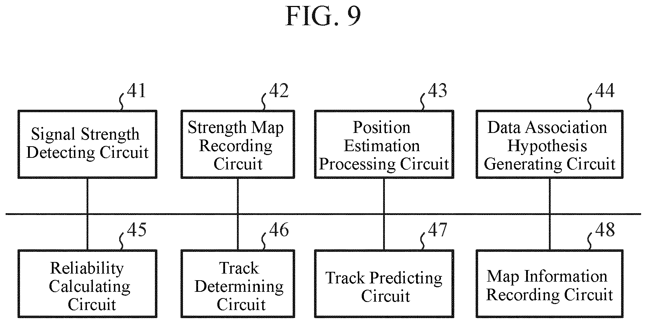

FIG. 9 is a hardware configuration diagram showing hardware of the position estimating unit 10 and the tracking processing unit 20 in the track estimating device according to the fourth embodiment.

In FIGS. 8 and 9, the same reference signs as those of FIGS. 1 and 2 indicate the same or corresponding portions and thus description thereof is omitted.

A map information saving unit 71 is implemented by, for example, a map information recording circuit 48 shown in FIG. 9.

The map information saving unit 71 saves map information.

As with the track updating unit 25 shown in FIG. 1, a track updating unit 72 updates a track included in each data association hypothesis, using an observation position included in each data association hypothesis calculated by the evaluation value calculating unit 24.

The track updating unit 72 limits data association hypotheses to be outputted to the hypothesis saving unit 27, using map information saved in the map information saving unit 71 among the data association hypotheses including the updated tracks.

In the track estimating device shown in FIG. 8, the map information saving unit 71 and the track updating unit 72 are applied to the track estimating device shown in FIG. 7. However, this is merely an example and the map information saving unit 71 and the track updating unit 72 may be applied to the track estimating device shown in FIG. 1.

Next, operation of the track estimating device shown in FIG. 8 will be described.

Note, however, that since the components of the track estimating device are the same as those of the track estimating devices shown in FIGS. 1 and 7 except for the map information saving unit 71 and the track updating unit 72, here, only operation of the map information saving unit 71 and the track updating unit 72 will be described.

As with the track updating unit 25 shown in FIG. 1, the track updating unit 72 updates a track $x^i_{k|k-1}$ included in each data association hypothesis, using an observation position included in each data association hypothesis calculated by the evaluation value calculating unit 24.

The track updating unit 72 checks positions that hinder the passage of a user carrying a portable information terminal which is an observation target, e.g., indoor columns and walls, using map information saved in the map information saving unit 71.

Since a track that passes through a position that hinders the passage of the user among the updated tracks $x^i_{k|k}$ is highly likely to be the wrong track, the track updating unit 72 excludes a data association hypothesis including the track from data association hypotheses to be outputted to the hypothesis saving unit 27.

The track updating unit 72 outputs only data association hypotheses that remain without being excluded to each of the track determination processing unit 26 and the hypothesis saving unit 27. By this operation, tracks to be subjected to a prediction process by the track predicting unit 62 are limited over the first to third embodiments.

In the above-described fourth embodiment, the track estimating device is configured in such a manner that the track determining unit 23 limits tracks to be subjected to a prediction process by the track predicting unit 62, using map information. Therefore, since the track estimating device can remove the wrong tracks, the track estimating device can increase the accuracy of estimation of an observation position in the position estimating unit 10 and can increase the accuracy of determination of a track in the tracking processing unit 20 over the track estimating devices of the first to third embodiments.

In addition, the track estimating device of the fourth embodiment can reduce the amount of memory for saving hypotheses and data association hypotheses and can reduce the processing load of each of the position estimating unit 10 and the tracking processing unit 20 over the track estimating devices of the first to third embodiment.

INDUSTRIAL APPLICABILITY

The invention is suitable for a track estimating device that determines a track of an observation target.

In addition, the invention is suitable for a portable information terminal including a track estimating device.

REFERENCE SIGNS LIST

1: signal observing unit, 2: sensor, 3: signal receiving unit, 10: position estimating unit, 11: signal strength detecting unit, 12: strength map saving unit, 13: position estimation processing unit, 20: tracking processing unit, 21: data association hypothesis generating unit, 22: reliability calculating unit, 23: track determining unit, 24: evaluation value calculating unit, 25: track updating unit, 26: track determination processing unit, 27: hypothesis saving unit, 28: track predicting unit, 41: signal strength detecting circuit, 42: strength map recording circuit, 43: position estimation processing circuit, 44: data association hypothesis generating circuit, 45: reliability calculating circuit, 46: track determining circuit, 47: track predicting circuit, 48: map information recording circuit, 51: processor, 52: memory, 61: measurement data observing unit, 62: track predicting unit, 71: map information saving unit, 72: track updating unit

**Claims**

1.  A track estimating device comprising:

    a signal observing unit (1) configured to receive a plurality of signals, each signal being outputted from a corresponding signal source;
    a position estimating unit (10) configured to estimate, for each signal source, a respective observation position associated with each signal source from a strength of the signal received by the signal observing unit, each observation position being an estimate of a position of an observation target on which the signal observing unit is mounted;
    a data association hypothesis generating unit (21) configured to generate a plurality of data association hypotheses, each of the data association hypotheses including a hypothesis and an observation position estimated by the position estimating unit, each hypothesis including a track of the observation target;
    a reliability calculating unit (22) configured to calculate a reliability of each observation position, using a probability density distribution of the associated signal strength at the observation position estimated by the position estimating unit; and
    a track determining unit (23) configured to select one data association hypothesis from the plurality of data association hypotheses generated by the data association hypothesis generating unit, by referring to the reliability of the corresponding observation position calculated by the reliability calculating unit, and to determine a track included in the hypothesis included in the selected data association hypothesis to be a track of the observation target,
    wherein the track determining unit (23) includes a track updating unit (25;72) configured to update the track included in the hypothesis included in each corresponding data association hypothesis, using at least the observation position included in the corresponding data association hypothesis, the corresponding data association hypothesis being one of the data association hypotheses generated by the data association hypothesis generating unit.

2.  The track estimating device according to claim 1, wherein
    the track estimating device comprises a track predicting unit (28;62) configured to perform a prediction process to each track updated by the track updating unit, and outputting a plurality of hypotheses to the data association hypothesis generating unit, each one of the plurality of hypotheses including a track having been subjected to the prediction process.

3.  The track estimating device according to claim 1, wherein the track determining unit includes:

    an evaluation value calculating unit (24) configured to calculate an evaluation value of each data association hypothesis generated by the data association hypothesis generating unit, by referring to the reliability of the corresponding observation position calculated by the reliability calculating unit; and
    a track determination processing unit (26) configured to obtain one data association hypothesis from among the plurality of data association hypotheses generated by the data association hypothesis generating unit by referring to the evaluation values of the data association hypotheses calculated by the evaluation value calculating unit, and to determine the track included in the hypothesis included in the obtained data association hypothesis to be a track of the observation target.

4. The track estimating device according to claim 1, wherein the position estimating unit is configured to obtain a strength map for each signal source indicating signal strengths obtained when the signal outputted from the signal source is received at each of a plurality of positions, to search for a signal strength corresponding to the strength of the signal received by the signal observing unit from among the signal strengths at the respective reception positions indicated by the strength map, and to obtain for each signal source, as the associated observation position, a reception position associated with the searched signal strength from the strength map.

5. The track estimating device according to claim 4, wherein the position estimating unit is configured to calculate an average position of positions of the observation target, each one of the positions being indicated by a corresponding track, the corresponding track being one of the tracks included in the plurality of hypotheses, to extract signal strengths at reception positions whose distances from the average position are within a threshold value, from among the signal strengths at the respective reception positions indicated by each strength map, and to search for a signal strength corresponding to the strength of the signal received by the signal observing unit from among the extracted signal strengths.

6. The track estimating device according to claim 2, wherein the position estimating unit is configured to obtain a strength map indicating signal strengths obtained when the signal outputted from each signal source is received at different positions, to set a position of the observation target indicated by a track included in the plurality of hypotheses as an initial value of a search process, and searches the observation position by the search process from the strength map.

7. The track estimating device according to claim 2, wherein

the reliability calculating unit is configured to calculate a reliability of each observation position estimated by the position estimating unit and also to estimate observation noise using the probability density distribution, the observation noise being noise at each observation position, and
the track updating unit is configured to update each track included in a corresponding hypothesis included in a corresponding data association hypothesis, using a corresponding position of the observation target and the corresponding observation noise, the corresponding position of the observation target being indicated by the track included in the corresponding hypothesis included in the corresponding data association hypothesis, the corresponding data association hypothesis being one of the data association hypotheses generated by the data association hypothesis generating unit.

8. The track estimating device according to claim 2, comprising a measurement data observing unit (61) configured to observe measurement data of the observation target, wherein
the track predicting unit (62) is configured to perform a prediction process to the tracks updated by the track updating unit, using the measurement data observed by the measurement data observing unit.

9. The track estimating device according to claim 2, wherein the track updating unit (72) is configured to limit tracks to be subjected to a prediction process by the track predicting unit, using map information.

10. A portable information terminal comprising a track estimating device according to claim 1 for determining a track of an observation target.

**Patentansprüche**

1. Wegschätzungsvorrichtung, die Folgendes umfasst:

eine Signalbeobachtungseinheit (1), die dazu ausgelegt ist, eine Vielzahl von Signalen zu empfangen, wobei jedes Signal von einer entsprechenden Signalquelle ausgegeben wird;
eine Positionsschätzeinheit (10), die dazu ausgelegt ist, für jede Signalquelle anhand der Stärke des von der Signalbeobachtungseinheit empfangenen Signals eine entsprechende Beobachtungsposition, die jeder Signalquelle zugeordnet ist, zu schätzen, wobei jede Beobachtungsposition eine Schätzung einer Position eines Beobachtungsziels ist, auf der die Signalbeobachtungseinheit angebracht ist;
eine Datenzuordnungshypothesenerzeugungseinheit (21), die dazu ausgelegt ist, eine Vielzahl von Datenzuordnungshypothesen zu erzeugen, wobei jede der Datenzuordnungshypothesen eine Hypothese und eine von der Positionsschätzeinheit geschätzte Beobachtungsposition umfasst, wobei jede Hypothese einen Weg des Beobachtungsziels umfasst;

eine Zuverlässigkeitsberechnungseinheit (22), die dazu ausgelegt ist, unter Verwendung einer Wahrscheinlichkeitsdichteverteilung der zugeordneten Signalstärke an der von der Positionsschätzeinheit geschätzten Beobachtungsposition die Zuverlässigkeit jeder Beobachtungsposition zu berechnen; und

eine Wegbestimmungseinheit (23), die dazu ausgelegt ist, eine Datenzuordnungshypothese aus der von der Datenzuordnungshypothesenerzeugungseinheit erzeugten Vielzahl von Datenzuordnungshypothesen zu bestimmen, indem sie sich auf die Zuverlässigkeit der entsprechenden, von der Zuverlässigkeitsberechnungseinheit berechneten Beobachtungsposition bezieht, und zu bestimmen, dass ein Weg, der in der in der ausgewählten Datenzuordnungshypothese enthaltenen Hypothese enthalten ist, ein Weg des Beobachtungsziels ist, wobei die Wegbestimmungseinheit (23) eine Wegaktualisierungseinheit (25; 72) umfasst, die dazu ausgelegt ist, den in der in jeder entsprechenden Datenzuordnungshypothese enthaltenen Hypothese enthaltenen Weg unter Verwendung von zumindest der in der entsprechenden Datenzuordnungshypothese enthaltenen Beobachtungsposition zu aktualisieren, wobei die entsprechende Datenzuordnungshypothese eine aus den von der Datenzuordnungshypothesenerzeugungseinheit erzeugten Datenzuordnungshypothesen ist.

2. Wegschätzungsvorrichtung nach Anspruch 1, wobei
die Wegschätzungsvorrichtung eine Wegvorhersageeinheit (28; 62) umfasst, die dazu ausgelegt ist, einen Vorhersageprozess für jeden von der Wegaktualisierungseinheit aktualisierten Weg durchzuführen und eine Vielzahl von Hypothesen für die Datenzuordnungshypothesenerzeugungseinheit auszugeben, wobei jede aus der Vielzahl Hypothesen einen Weg umfasst, der dem Vorhersageprozess unterzogen worden ist.

3. Wegschätzungsvorrichtung nach Anspruch 1, wobei die Wegbestimmungseinheit Folgendes umfasst:

eine Bewertungswertberechnungseinheit (24), die dazu ausgelegt ist, einen Bewertungswert jeder von der Datenzuordnungshypothesenerzeugungseinheit erzeugten Datenzuordnungshypothese zu berechnen, indem sie sich auf die Zuverlässigkeit der entsprechenden, von der Zuverlässigkeitsberechnungseinheit berechneten Beobachtungsposition bezieht; und

eine Wegbestimmungsverarbeitungseinheit (26), die dazu ausgelegt ist, eine Datenzuordnungshypothese aus der Vielzahl von von der Datenzuordnungshypothesenerzeugungseinheit erzeugten Datenzuordnungshypothesen zu erhalten, indem sie sich auf die Bewertungswerte der von der Bewertungswertberechnungseinheit berechneten Datenzuordnungshypothesen bezieht, und zu bestimmen, dass der Weg, der in der in der ausgewählten Datenzuordnungshypothese enthaltenen Hypothese enthalten ist, ein Weg des Beobachtungsziels ist.

4. Wegschätzungsvorrichtung nach Anspruch 1, wobei die Positionsschätzeinheit dazu ausgelegt ist, für jede Signalquelle eine Stärkekarte zu erhalten, die Signalstärken angibt, die erhalten werden, wenn das von der Signalquelle ausgegebene Signal an jeder aus einer Vielzahl von Positionen empfangen wird, um unter den Signalstärken an den entsprechenden, in der Stärkekarte angegebenen Empfangspositionen nach einer Signalstärke zu suchen, die der Stärke des Signals entspricht, das von der Signalbeobachtungseinheit empfangen wurde, und für jede Signalquelle als zugeordnete Beobachtungsposition eine Empfangsposition zu erhalten, die der gesuchten Signalstärke aus der Stärkekarte zugeordnet ist.

5. Wegschätzungsvorrichtung nach Anspruch 4, wobei die Positionsschätzeinheit dazu ausgelegt ist, eine Durchschnittsposition von Positionen des Beobachtungsziels zu berechnen, wobei jede der Positionen durch einen entsprechenden Weg angegeben ist, wobei der entsprechende Weg einer aus den in der Vielzahl von Hypothesen enthaltenen Wege ist, um aus den Signalstärken an den entsprechenden, in jeder Stärkekarte angegebenen Empfangspositionen Signalstärken an Empfangspositionen zu extrahieren, deren Entfernungen von der Durchschnittsposition innerhalb eines Schwellenwerts liegen, und unter den extrahierten Signalstärken nach einer Signalstärke zu suchen, die der Stärke des von der Signalbeobachtungseinheit empfangenen Signals entspricht.

6. Wegschätzungsvorrichtung nach Anspruch 2, wobei die Positionsschätzeinheit dazu ausgelegt ist, eine Stärkekarte zu erhalten, die Signalstärken angibt, die erhalten werden, wenn das von jeder Signalquelle ausgegebene Signal an verschiedenen Positionen empfangen wird, um eine Position des Beobachtungsziels, die von einem in der Vielzahl von Hypothesen enthaltenen Weg als anfänglicher Wert eines Suchprozesses angegeben wird, einzustellen, und die Beobachtungsposition durch den Suchprozess anhand der Stärkekarte sucht.

7. Wegschätzungsvorrichtung nach Anspruch 2, wobei

die Zuverlässigkeitsberechnungseinheit dazu ausgelegt ist, die Zuverlässigkeit jeder von der Positionsschätzeinheit geschätzten Beobachtungsposition zu berechnen und ferner Beobachtungsrauschen unter Verwendung der Wahrscheinlichkeitsdichteverteilung zu schätzen, wobei das Beobachtungsrauschen Rauschen an jeder Beobachtungsposition ist, und

wobei die Wegaktualisierungseinheit dazu ausgelegt ist, unter Verwendung einer entsprechenden Position des Beobachtungsziels und des entsprechenden Beobachtungsrauschens jeden Weg, der in einer entsprechenden Hypothese enthalten ist, die in einer entsprechenden Datenzuordnungshypothese enthalten ist, zu aktualisieren, wobei die entsprechende Position des Beobachtungsziels durch den in der entsprechenden Datenzuordnungshypothese enthaltenen Hypothese enthaltenen Weg angegeben ist, wobei die entsprechende Datenzuordnungshypothese eine aus den von der Datenzuordnungshypothesenerzeugungshypothese erzeugten Datenzuordnungshypothesen ist.

8.  Wegschätzungsvorrichtung nach Anspruch 2, umfassend eine Messdatenbeobachtungseinheit (61), die dazu ausgelegt ist, Messdaten des Beobachtungsziels zu beobachten, wobei
die Wegvorhersageeinheit (62) dazu ausgelegt ist, unter Verwendung der von der Messdatenbeobachtungseinheit beobachteten Messdaten einen Vorhersageprozess für die durch die Wegaktualisierungseinheit aktualisierten Wege durchzuführen.

9.  Wegschätzungsvorrichtung nach Anspruch 2, wobei die Wegaktualisierungseinheit (72) dazu ausgelegt ist, Wege, die einem Vorhersageprozess durch die Wegvorhersageeinheit zu unterziehen sind, unter Verwendung von Karteninformationen zu beschränken.

10. Tragbares Informationsendgerät, das eine Wegschätzungsvorrichtung nach Anspruch 1 zum Bestimmen eines Wegs eines Beobachtungsziels umfasst.

**Revendications**

1.  Dispositif d'estimation de trajet, comprenant :

    une unité d'observation de signal (1) configurée de manière à recevoir une pluralité de signaux, chaque signal étant fourni en sortie à partir d'une source de signal correspondante ;
    une unité d'estimation de position (10) configurée de manière à estimer, pour chaque source de signal, une position d'observation respective associée à chaque source de signal, à partir d'une intensité du signal reçu par l'unité d'observation de signal, chaque position d'observation étant une estimation d'une position d'une cible d'observation sur laquelle l'unité d'observation de signal est montée ;
    une unité de génération d'hypothèses d'association de données (21) configurée de manière à générer une pluralité d'hypothèses d'association de données, chacune des hypothèses d'association de données incluant une hypothèse et une position d'observation estimée par l'unité d'estimation de position, chaque hypothèse incluant un trajet de la cible d'observation ;
    une unité de calcul de fiabilité (22) configurée de manière à calculer une fiabilité de chaque position d'observation, à l'aide d'une distribution de densité de probabilité de l'intensité de signal associée, à la position d'observation estimée par l'unité d'estimation de position ; et
    une unité de détermination de trajet (23) configurée de manière à sélectionner une hypothèse d'association de données parmi la pluralité d'hypothèses d'association de données générées par l'unité de génération d'hypothèses d'association de données, en faisant référence à la fiabilité de la position d'observation correspondante calculée par l'unité de calcul de fiabilité, et à déterminer qu'un trajet inclus dans l'hypothèse incluse dans l'hypothèse d'association de données sélectionnée est un trajet de la cible d'observation ;
    dans laquelle l'unité de détermination de trajet (23) inclut une unité de mise à jour de trajet (25 ; 72) configurée de manière à mettre à jour le trajet inclus dans l'hypothèse incluse dans chaque hypothèse d'association de données correspondante, en utilisant au moins la position d'observation incluse dans l'hypothèse d'association de données correspondante, l'hypothèse d'association de données correspondante étant l'une des hypothèses d'association de données générées par l'unité de génération d'hypothèses d'association de données.

2.  Dispositif d'estimation de trajet selon la revendication 1, dans lequel :
    le dispositif d'estimation de trajet comprend une unité de prédiction de trajet (28 ; 62) configurée de manière à mettre en œuvre un processus de prédiction pour chaque trajet mis à jour par l'unité de mise à jour de trajet, et fournissant en sortie une pluralité d'hypothèses à l'unité de génération d'hypothèses d'association de données, chacune de la pluralité d'hypothèses incluant un trajet ayant été soumis au processus de prédiction.

3. Dispositif d'estimation de trajet selon la revendication 1, dans lequel l'unité de détermination de trajet inclut :

une unité de calcul de valeur d'évaluation (24) configurée de manière à calculer une valeur d'évaluation de chaque hypothèse d'association de données générée par l'unité de génération d'hypothèses d'association de données, en faisant référence à la fiabilité de la position d'observation correspondante calculée par l'unité de calcul de fiabilité ; et
une unité de traitement de détermination de trajet (26) configurée de manière à obtenir une hypothèse d'association de données parmi la pluralité d'hypothèses d'association de données générées par l'unité de génération d'hypothèses d'association de données, en faisant référence aux valeurs d'évaluation des hypothèses d'association de données calculées par l'unité de calcul de valeur d'évaluation, et à déterminer le trajet inclus dans l'hypothèse incluse dans l'hypothèse d'association de données obtenue comme étant un trajet de la cible d'observation.

4. Dispositif d'estimation de trajet selon la revendication 1, dans lequel l'unité d'estimation de position est configurée de manière à obtenir une carte d'intensité, pour chaque source de signal, indiquant des intensités de signal obtenues lorsque le signal fourni en sortie à partir de la source de signal est reçu à chacune d'une pluralité de positions, à rechercher une intensité de signal, correspondant à l'intensité du signal reçu par l'unité d'observation de signal, parmi les intensités de signal, aux positions de réception respectives indiquées par la carte d'intensité, et à obtenir, pour chaque source de signal, en tant que la position d'observation associée, une position de réception associée à l'intensité de signal recherchée à partir de la carte d'intensité.

5. Dispositif d'estimation de trajet selon la revendication 4, dans lequel l'unité d'estimation de position est configurée de manière à calculer une position moyenne de positions de la cible d'observation, chacune des positions étant indiquée par un trajet correspondant, le trajet correspondant étant l'un des trajets inclus dans la pluralité d'hypothèses, à extraire les intensités de signal à des positions de réception dont les distances par rapport à la position moyenne sont comprises dans une valeur de seuil, parmi les intensités de signal aux positions de réception respectives indiquées par chaque carte d'intensité, et à rechercher une intensité de signal correspondant à l'intensité du signal reçu par l'unité d'observation de signal parmi les intensités de signal extraites.

6. Dispositif d'estimation de trajet selon la revendication 2, dans lequel l'unité d'estimation de position est configurée de manière à obtenir une carte d'intensité indiquant des intensités de signal obtenues lorsque le signal fourni en sortie à partir de chaque source de signal est reçu à différentes positions, à définir une position de la cible d'observation indiquée par un trajet inclus dans la pluralité d'hypothèses, en tant qu'une valeur initiale d'un processus de recherche, et à rechercher la position d'observation, par le biais du processus de recherche, à partir de la carte d'intensité.

7. Dispositif d'estimation de trajet selon la revendication 2, dans lequel :

l'unité de calcul de fiabilité est configurée de manière à calculer une fiabilité de chaque position d'observation estimée par l'unité d'estimation de position, et également à estimer un bruit d'observation, à l'aide de la distribution de densité de probabilité, le bruit d'observation étant un bruit à chaque position d'observation ; et
l'unité de mise à jour de trajet est configurée de manière à mettre à jour chaque trajet inclus dans une hypothèse correspondante incluse dans une hypothèse d'association de données correspondante, en utilisant une position correspondante de la cible d'observation et le bruit d'observation correspondant, la position correspondante de la cible d'observation étant indiquée par le trajet inclus dans l'hypothèse correspondante incluse dans l'hypothèse d'association de données correspondante, l'hypothèse d'association de données correspondante étant l'une des hypothèses d'association de données générées par l'unité de génération d'hypothèses d'association de données.

8. Dispositif d'estimation de trajet selon la revendication 2, comprenant une unité d'observation de données de mesure (61) configurée de manière à observer des données de mesure de la cible d'observation, dans laquelle l'unité de prédiction de trajet (62) est configurée de manière à mettre en œuvre un processus de prédiction pour les trajets mis à jour par l'unité de mise à jour de trajet, en utilisant les données de mesure observées par l'unité d'observation de données de mesure.

9. Dispositif d'estimation de trajet selon la revendication 2, dans lequel l'unité de mise à jour de trajet (72) est configurée de manière à restreindre des trajets devant être soumis à un processus de prédiction par l'unité de prédiction de trajet, à l'aide d'informations de carte.

**10.** Terminal d'informations portatif comprenant un dispositif d'estimation de trajet selon la revendication 1, pour déterminer un trajet d'une cible d'observation.

# FIG. 1

## FIG. 2

| 41 | 42 | 43 | 44 |
|----|----|----|----|
| Signal Strength Detecting Circuit | Strength Map Recording Circuit | Position Estimation Processing Circuit | Data Association Hypothesis Generating Circuit |

| 45 | 46 | 47 |
|----|----|----|
| Reliability Calculating Circuit | Track Determining Circuit | Track Predicting Circuit |

## FIG. 3

| 51 | 52 |
|----|----|
| Processor | Memory |

# FIG. 4

Start

Detect Strengths of Reception Signals
by Signal Strength Detecting Unit — ST1

Estimate Observation Positions
by Position Estimation Processing Unit — ST2

Generate, by Data Association Hypothesis
Generating Unit, Data Association
Hypotheses Each Including Hypothesis and
Observation Position — ST3

Calculate Reliability of Observation
Positions by Reliability Calculating Unit — ST4

Calculate Evaluation Values of
Data Association Hypotheses
by Evaluation Value Calculating Unit — ST5

Update Tracks
by Track Updating Unit — ST6

Select, by Track Determination
Processing Unit, Data Association
Hypothesis Including Highest Evaluation
Value from Among Plurality of Data
Association Hypotheses — ST7

Determine, by Track Determination
Processing Unit, Track Included in Selected
Data Association Hypothesis to Be
Track of Observation Target — ST8

End

# FIG. 5

○: Represents Signal Reception Position

Predetermined Area

# FIG. 6

Strength Map $h_s$ of Signal Source s

Strength

$h_s (z^s_k - \gamma)$

$h_s (z^s_k)$

$h_s (z_k{}^s + \gamma)$

D

Probability Density Distribution for Signal Strength $h_s (z^s k)$

Reliability

$z^s k - \gamma$    $z^s k$    $z^s k + \gamma$

Position

⟷ Strength Range Corresponding to Range Within $\gamma$

# FIG. 7

Signal Observing Unit — 1
Sensor — 2
Signal Receiving Unit — 3

Tracking Processing Unit — 20
Measurement Data Observing Unit — 61
Track Predicting Unit — 62
Hypothesis Saving Unit — 27
Track Determining Unit — 23

Signal Strength Detecting Unit — 11
Position Estimation Processing Unit — 13
Data Association Hypothesis Generating Unit — 21
Evaluation Value Calculating Unit — 24
Track Updating Unit — 25

Strength Map Saving Unit — 12
Reliability Calculating Unit — 22
Track Determination Processing Unit — 26

Position Estimating Unit — 10

EP 3 792 651 B1

# FIG. 8

EP 3 792 651 B1

FIG. 9

| 41 | 42 | 43 | 44 |
|---|---|---|---|
| Signal Strength Detecting Circuit | Strength Map Recording Circuit | Position Estimation Processing Circuit | Data Association Hypothesis Generating Circuit |

| 45 | 46 | 47 | 48 |
|---|---|---|---|
| Reliability Calculating Circuit | Track Determining Circuit | Track Predicting Circuit | Map Information Recording Circuit |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012007779 A1
- US 2014171098 A1

- JP 2015197417 A

**Non-patent literature cited in the description**

- A Reliability-Augmented Particle Filter for Magnetic Fingerprinting Based Indoor Localization on Smartphone. **XIE HONGWEI et al.** IEEE Transactions on Mobile Computing. IEEE service centre, 2016, vol. 15, 1877-1892

- RFID-enabled location fingerprinting based on similarity models from probabilistic similarity measures. **KOCH ARTUR et al.** 2016 IEEE International Conference on Robotics and Automation (ICRA). IEEE, 16 May 2016, 4557-4563